# EUROPEAN PATENT APPLICATION

(11) **EP 4 378 574 A1**
(43) Date of publication of application: **05.06.2024**
(21) Application number: 23212381.0
(22) Date of filing: 27.11.2023
(51) Int. Cl.: B01J 8/12, B01J 8/18, C08F 10/00

(54) **OLEFIN POLYMERIZATION REACTOR**

(30) Priority: 30.11.2022 JP 2022192023
(71) Applicant: Sumitomo Chemical Company Limited, Tokyo 103-6020 (JP)
(72) Inventor: TAKEMURA, Kazuyuki, Ichihara-shi, Chiba 299-0195 (JP); TATSUI, Tsuyoshi, Ichihara-shi, Chiba 299-0195 (JP); MATSUI, Kojiro, Ichihara-shi, Chiba 299-0195 (JP); MIWA, Masahiro, Ichihara-shi, Chiba 299-0195 (JP)
(74) Representative: Winter, Brandl - Partnerschaft mbB

(57) **Abstract**

An object of the present invention is to provide an olefin polymerization reactor capable of efficiently removing heat of reaction and having excellent energy saving properties.

An olefin polymerization reactor includes a tubular powder container 20 forming a moving bed MB in which powder moves downward by gravity, and including a plurality of intermediate openings G provided spaced apart from each other in a vertical direction, a gas container 10 that accommodates gas discharged from the plurality of intermediate openings G, a powder feed pipe that feeds, to an upper portion of the tubular powder container 20, polyolefin powder and/or slurry containing polyolefin powder and olefin monomer liquid, a liquid feed pipe 30 that feeds olefin monomer liquid to an inside of the tubular powder container 20, and a gas discharge pipe that discharges olefin monomer gas from the gas container 10 to outside.

## Description

### BACKGROUND OF THE INVENTION

### Field of the Invention

The present invention relates to an olefin polymerization reactor.

### Description of the Related Art

There are known entrained-bed and fluidized-bed olefin polymerization reactors as apparatuses for gas-phase polymerization of olefin from an olefin monomer (see JP-A-08-253517) .

### SUMMARY OF THE INVENTION

However, such olefin polymerization reactors require a high gas flow rate therein, requiring a large amount of energy to drive a large blower. In addition, such olefin polymerization reactors require a large heat exchanger, a blower, or the like to cool and circulate a large amount of gas discharged from the reactor.

The present application has been made in view of the above problems, and an object thereof is to provide an olefin polymerization reactor capable of efficiently removing heat of reaction and having excellent energy saving properties.

### SUMMARY OF THE INVENTION

[1] An olefin polymerization reactor including
   a tubular powder container forming a moving bed in which powder moves downward by gravity, and including a plurality of intermediate openings provided spaced apart from each other in a vertical direction,
   a gas container that accommodates gas discharged from the plurality of intermediate openings,
   a powder feed pipe that feeds, to an upper portion of the tubular powder container, polyolefin powder or slurry containing polyolefin powder and olefin monomer liquid,
   a liquid feed pipe that feeds olefin monomer liquid to an inside of the tubular powder container, and
   a gas discharge pipe that discharges olefin monomer gas from the gas container to outside.
[2] The olefin polymerization reactor according to [1],
   in which the tubular powder container includes a plurality of unit tubes disposed side by side in the vertical direction,
   an axial direction of each of the unit tubes is disposed along the vertical direction, and
   the intermediate openings are formed between the unit tubes.
[3] The olefin polymerization reactor according to [1] or [2], in which each of the unit tubes is a tapered tube of which outer diameter and inner diameter decrease downward.
[4] The olefin polymerization reactor according to [3], in which, in each pair of unit tubes adjacent to each other in the vertical direction, the upper end of a lower unit tube is set higher in position than the lower end of the upper unit tube.
[5] The olefin polymerization reactor according to [2] or [3], in which each of the unit tubes is formed by a part of inner surface of the tubular powder container, and a partition plate disposed in the tubular powder container and horizontally partitioning an inside of the tubular powder container, and
   between each pair of unit tubes adjacent to each other in the vertical direction, a partition plate of a lower unit tube is disposed away from a partition plate of an upper unit tube in an outward direction of the upper unit tube, and the intermediate opening is formed between the partition plates.
[6] The olefin polymerization reactor according to [5], in which, in each pair of unit tubes adjacent to each other in the vertical direction, the upper end of a lower partition plate is set higher in position than the lower end of the upper partition plate.
[7] The olefin polymerization reactor according to any one of [2] to [6], in which each of the unit tubes is disposed such that a lower portion of inner surface of each of the unit tubes is in contact with the moving bed and an upper portion of the inner surface of each of the unit tubes is not in contact with the moving bed.
[8] The olefin polymerization reactor according to any one of [1] to [7], in which the liquid feed pipe includes a plurality of outlet openings spaced apart from each other in the vertical direction in the tubular powder container and/or a plurality of outlet openings spaced apart from each other in a horizontal direction in the tubular powder container.
[9] The olefin polymerization reactor according to any one of [1] to [8], in which the liquid feed pipe includes a main pipe extending in the vertical direction and a plurality of branch pipes branching from the main pipe.
[10] The olefin polymerization reactor according to [9], in which the branch pipes extend obliquely downward from the main pipe.
[11] The olefin polymerization reactor according to [9] or [10], in which the main pipe is provided with a plurality of outlet openings, and/or the branch pipes are provided with a plurality of outlet openings.
[12] The olefin polymerization reactor according to any one of [1] to [11], in which a plurality of the liquid feed pipes is provided in the tubular powder container so as to be spaced apart from each other in the vertical direction, and an olefin monomer liquid feed line is connected to each of the liquid feed pipes.
[13] The olefin polymerization reactor according to any one of [1] to [12], further including a hopper that receives powder discharged from a lower-end opening of the tubular powder container.
[14] The olefin polymerization reactor according to any one of [1] to [13], further including a baffle for making a shape of a lower-end opening of the tubular powder container annular.
[15] The olefin polymerization reactor according to any one of [1] to [14], further including
   a circular ring disposed outside of a lower-end portion of the tubular powder container and having an inner diameter larger than an inner diameter of a lower end of the tubular powder container,
   a hook member fixed to the circular ring and configured such that a tip end of the hook member enters a lower-end opening of the tubular powder container upward, and
   a rotation mechanism that rotates the circular ring around a vertical axis.
[16] A polyolefin production system including
   the olefin polymerization reactor according to any one of [1] to [15],
   a condenser that condenses gas discharged from the gas discharge pipe to obtain olefin monomer liquid, and
   a pump that feeds olefin monomer liquid obtained by the condenser to the liquid feed pipe.
[17] A method for producing polyolefin using the olefin polymerization reactor according to any one of [1] to [15].

Provided is an olefin polymerization reactor capable of efficiently removing heat of reaction and having excellent energy saving properties.

### BRIEF DESCRIPTION OF THE DRAWING

Fig. 1 is a process flow diagram of a polyolefin production system 200 according to the first embodiment;
Fig. 2 is an enlarged cross-sectional view of an upper portion of an olefin polymerization reactor 100 shown in Fig. 1;
Fig. 3 is an enlarged cross-sectional view of a central part of the olefin polymerization reactor 100 shown in Fig. 1;
Fig. 4 is an enlarged cross-sectional view of a lower portion of the olefin polymerization reactor 100 shown in Fig. 1;
Fig. 5 is an enlarged cross-sectional view of a tubular powder container 20 and a liquid feed pipe 30 of the olefin polymerization reactor 100 shown in Fig. 1;
Fig. 6 is an enlarged cross-sectional view of a powder discharge mechanism 50 shown in Fig. 5;
Fig. 7 is a perspective view of a ring 60 of the powder discharge mechanism 50 shown in Fig. 6; and
Fig. 8(a) is a cross-sectional view of an upper portion of an olefin polymerization reactor 100 according to a second embodiment, and Fig. 8(b) is a view taken along a line B-B in Fig. 8(a).

### DETAILED DESCRIPTION OF THE PREFERRED EMBODIMENTS

A polyolefin production system 200 according to an embodiment of the present invention will be described with reference to the drawings.

### (Polyolefin production system according to first embodiment)

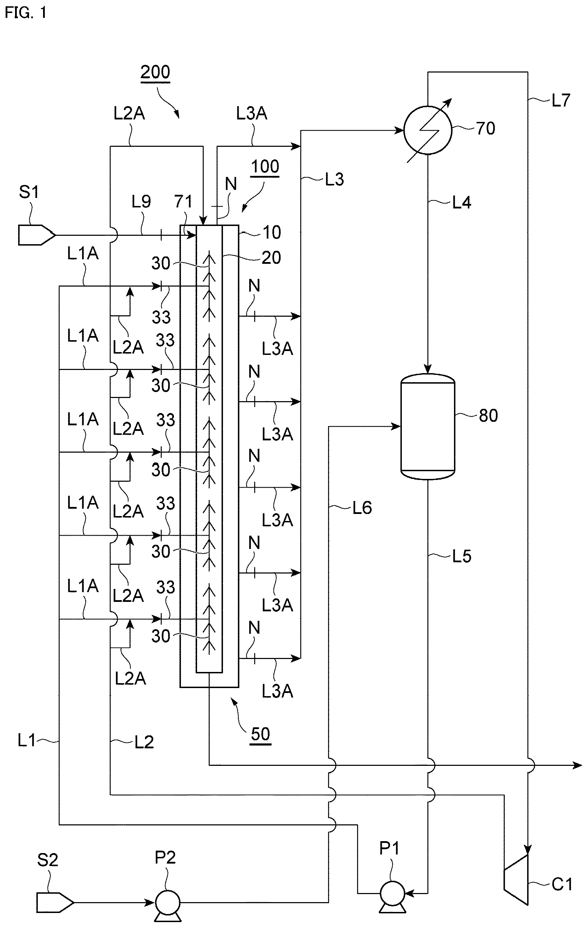

As shown in Fig. 1, a polyolefin production system 200 according to the present embodiment mainly includes an olefin polymerization reactor 100, a pump P1, a pump P2, a compressor C1, an olefin monomer liquid reservoir 80, and a condenser 70.

### (Olefin polymerization reactor 100)

The olefin polymerization reactor 100 mainly includes a gas container (outer tube) 10, a tubular powder container (inner tube) 20 accommodated in the gas container 10, and a plurality of liquid feed pipes 30 accommodated in the tubular powder container 20.

### (Tubular powder container 20)

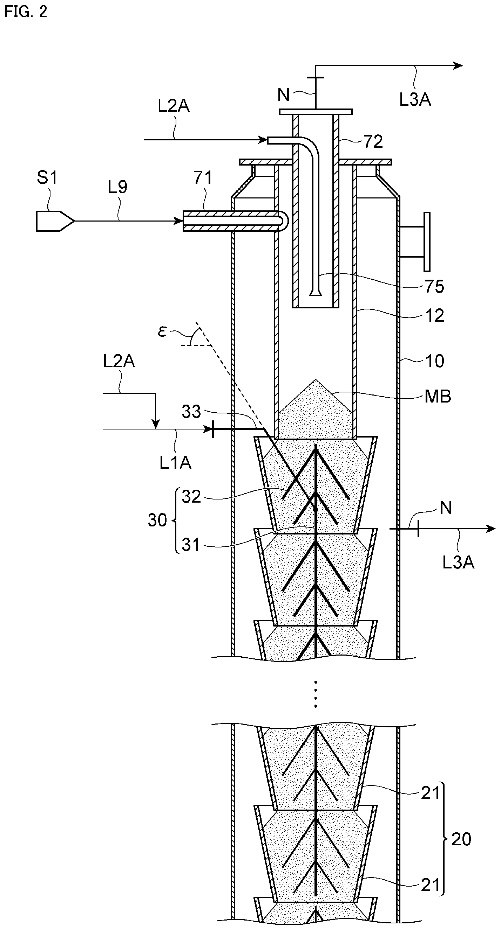

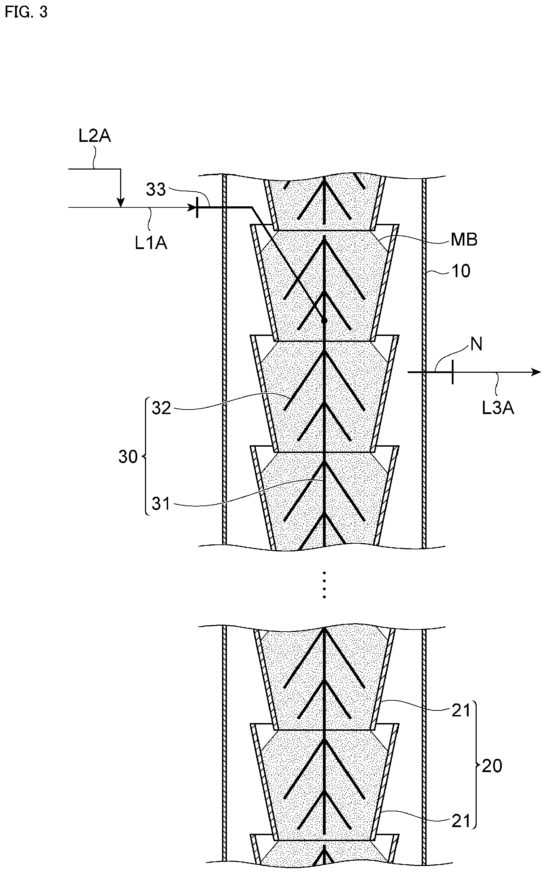

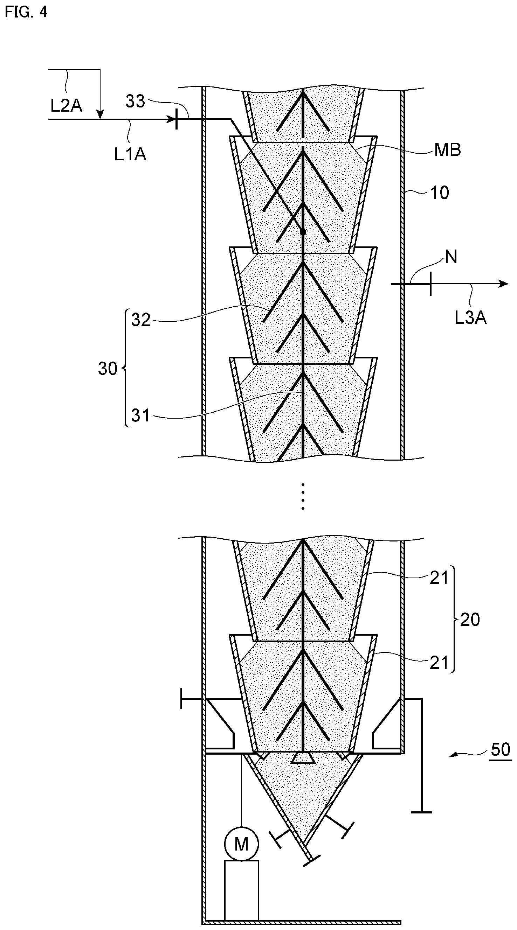

The tubular powder container 20 includes a tubular shape extending in the vertical direction. As shown in Figs. 2 to 5, the tubular powder container 20 includes a large number (plurality) of tapered tubes (unit tubes) 21 of which outer diameter and inner diameter decrease downward. Inner surface and outer surface of a horizontal cross-section of a tapered tube 21 may have a circular shape. In other words, the tapered tube 21 may have a conical tube shape obtained by removing, from the first truncated cone having an upper bottom surface and a lower bottom surface smaller in outer diameter than the upper bottom surface, the second truncated cone having an upper bottom surface and lower bottom surface smaller in diameter than the upper bottom surface and lower bottom surface of the first truncated cone, respectively.

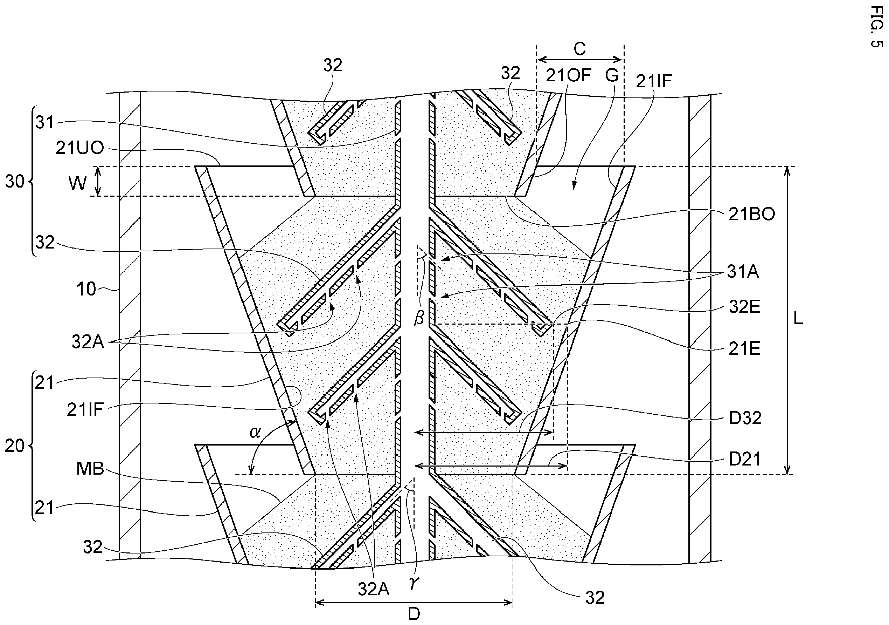

As shown in Fig. 5, an angle (acute angle) α formed by inner surface 21IF of the tapered tube 21 and a horizontal plane is preferably larger than an angle of repose of polyolefin powder fed into the tapered tube 21. Specifically, α may be 60° to 75°.

A length L of the tapered tube 21 in an axial direction may be 0.8 to 6.0 times an inner diameter D of a lower-end opening of the tapered tube 21.

The axial directions of the tapered tubes 21 are disposed along the vertical direction, and the plurality of tapered tubes 21 is disposed side by side in the vertical direction. Therefore, the tubular powder container 20 may form a moving bed in which powder moves downward by gravity via the tapered tubes 21.

As shown in Fig. 5, between a pair of vertically adjacent tapered tubes 21, a gap G (corresponding to an intermediate opening in the claims) is formed between outer surface 21OF of an upper tapered tube 21 and inner surface 21IF of a lower tapered tube 21. That is, the tubular powder container 20 includes a plurality of gaps (intermediate openings) G provided away from each other in the vertical direction. Therefore, olefin monomer gas generated in the tubular powder container 20 can selectively escape from the tubular powder container 20 into a space between the tubular powder container 20 and the gas container 10 via the gap G. The size of the gap G can be appropriately set so that excess olefin monomer gas generated by evaporation of olefin monomer liquid in each tapered tube 21 and not consumed by polymerization can flow out from the gap G at a linear velocity at which the olefin monomer gas does not entrain powder in the tapered tube 21.

The distance C of the gap G, that is, a horizontal distance C between the outer surface 21OF and the inner surface 21IF may be, but not particularly limited to, for example, 0.02 m to 0.5 m. A horizontal cross-sectional area of the uppermost portion of the gap G may be, but not particularly limited to, 0.008 m² to 1.37 m².

In the present embodiment, each of the tapered tubes 21 is disposed such that a lower portion of the inner surface 21IF of the tapered tubes 21 is in contact with a moving bed MB of powder and an upper portion of the inner surface 21IF of the tapered tubes 21 is not in contact with the moving bed MB of the powder. This makes it possible to reduce an amount of powder discharging to outside from the gap G, by which generation of powder not passing through the tubular powder container 20 is inhibited, achieving accurate control of staying time of the powder.

Specifically, as shown in Fig. 5, between a pair of vertically adjacent tapered tubes 21, height of a lower end 21BO of the upper tapered tube 21 is equal to height of an upper end 21UO of the lower tapered tube 21 or lower than the height of the upper end 21UO of the lower tapered tube 21. This makes it possible to discharge gas from the tubular powder container 20 to the gas container 10 via the gap G, while reducing an amount of the powder discharging from the tubular powder container 20 to the gas container 10 via the gap G. A difference W between the height of the lower end 21BO of the upper tapered tube 21 and the height of the upper end 21UO of the lower tapered tube 21 may be set to 0 mm to 200 mm. The difference W is preferably 0 mm or more, that is, the lower end 21BO of the upper tapered tube 21 is preferably inserted into the lower tapered tube 21.

### (Liquid feed pipe 30)

As shown in Fig. 1, the liquid feed pipes 30 are disposed in the tubular powder container 20, along a vertical axis. The liquid feed pipes 30 are disposed in the tubular powder container 20, while being spaced apart from each other in the vertical direction. In Fig. 1, five liquid feed pipes 30 are disposed in the tubular powder container 20.

As shown in Fig. 2, a liquid feed pipe 30 includes a main pipe 31 extending in the vertical direction along a central axis of the tubular powder container 20, and a plurality of branch pipes 32 branching and extending obliquely downward from the main pipe 31.

As shown in Figs. 2 to 4, upper and lower ends of the main pipes 31 are closed, and the main pipes 31 do not communicate with each other in the tubular powder container 20 and the gas container 10.

Outer diameter of a main pipe 31 may be, but not particularly limited to, 8 mm to 216 mm, and an inner diameter of the main pipe 31 may be, but not particularly limited to, 6 mm to 208 mm.

As shown in Fig. 5, the main pipe 31 is provided with a large number of obliquely downward outlet openings (nozzles) 31A. A plurality of outlet openings 31A is provided in the main pipe 31, while being spaced apart from each other in the vertical direction, and a plurality of outlet openings 31A is provided in the main pipe 31, while being spaced apart from each other also in a circumferential direction of the main pipe 31.

A diameter of an outlet opening 31A may be, for example, 1 mm to 5 mm.

An angle β formed by an axis of the outlet opening 31A and the vertical axis may be set to 15° to 30°.

The branch pipes 32 are not necessarily required, and are preferably installed when a maximum inner diameter of the tubular powder container 20 is relatively large, exceeding 500 mm.

The branch pipes 32 branch obliquely downward from the main pipe 31, and tip ends of the branch pipes 32 are closed. An angle γ formed by an axis of a branch pipe 32 and the horizontal plane is not limited. However, the axis of the branch pipe 32 is preferably obliquely downward, and the angle γ is preferably 15° to 75°, more preferably 50° to 70°, and may be 60° to 65°. Here, γ = 0° indicates that the axis of the branch pipe is in a horizontal direction, and γ = 90° indicates that the axis of the branch pipe is in a vertically downward direction. The angle γ is preferably larger than the angle of repose of the polyolefin powder.

The length of the branch pipe 32 may be set such that the tip end of the branch pipe 32 is in contact with the inner surface of the tapered tube 21, but is preferably set such that the tip end of the branch pipe 32 is not in contact with the inner surface of the tapered tube 21. The length of the branch pipe 32 is preferably set such that outer diameter D32 of a tip end 32E of the branch pipe 32 is about 0.2 to 0.8 times outer diameter D21 at a position 21E at the same level as the tip end 32E of the branch pipe 32, the position 21E being on the inner surface 21IF of the tapered tube 21.

As shown in Fig. 5, a branch pipe 32 is provided with obliquely downward outlet openings (nozzles) 32A. A plurality of outlet openings 32A is provided in the branch pipe 32, while being spaced apart from each other in the axial direction of the branch pipe 32.

A diameter of an outlet opening 32A may be 1 mm to 5 mm. Outer diameter of the branch pipe 32 may be 20 mm to 35 mm, and an inner diameter of the branch pipe 32 may be 16 mm to 30 mm.

A plurality of branch pipes 32 may be disposed radially in a radial direction of the main pipe 31, from the same height position in the vertical direction of the main pipe 31. For example, when the liquid feed pipe 30 is viewed from above in the vertical direction, there may be disposed, at the same height position, three branch pipes spaced apart from each other by 120°, four branch pipes spaced apart from each other by 90°, or six branch pipes spaced apart from each other by 60°.

As shown in Fig. 5, the branch pipes 32 preferably branch in multiple directions radially from two or more height positions in one tapered tube 21.

As shown in Figs. 2 to 4, the main pipe 31 of each of the liquid feed pipes 30 is provided with a connection pipe 33 for feeding olefin monomer liquid to the liquid feed pipe 30 from outside of the gas container 10 through the gas container 10 and the tubular powder container 20.

As shown in Fig. 2, the connection pipe 33 is inclined obliquely downward in the tapered tube 21, that is, in the tubular powder container 20. An angle ε formed by an axis of the connection pipe 33 and the horizontal plane is preferably larger than the angle of repose of polyolefin powder fed into the tapered tube 21. Specifically, the angle ε may be set to 60° to 75°.

### (Gas container 10)

The gas container 10 is a tube extending in the vertical direction and accommodates the tubular powder container 20. The gas container 10 may have a circular cross-sectional shape. The gas container 10 may have a pressure-resistant structure that withstands pressure of fluid under reaction conditions. As shown in Fig. 2, an upper portion of the gas container 10 is closed. The first tubular guide 12 and a second tubular guide 72 are provided in the gas container 10. A lower end of the first tubular guide 12 is inserted into an upper end opening of the uppermost tapered tube 21 and extends in the vertical direction. The second tubular guide 72 is provided in the first tubular guide 12 and extends in the vertical direction, and a lower end of the second tubular guide 72 is positioned above a lower end of the first tubular guide 12. Upper ends of the first tubular guide 12 and second tubular guide 72 are closed.

The first tubular guide 12 is provided with a powder feed pipe 71 that penetrates the gas container 10 from the outside and opens to the first tubular guide 12, and that is for feeding polyolefin powder or polyolefin powder-containing slurry between the first tubular guide 12 and the second tubular guide 72, and a line L9 is connected to the powder feed pipe 71.

Here, as shown in Fig. 2, an opening of the powder feed pipe 71 in the first tubular guide 12 is provided between the first tubular guide 12 and the second tubular guide 72 so as to feed polyolefin powder or polyolefin powder-containing slurry in a tangential direction of a circumference of inner surface of the first tubular guide 12. Therefore, the powder fed from the powder feed pipe 71 moves downward by the action of gravity while rotating along the inner surface of the first tubular guide 12 between the first tubular guide 12 and the second tubular guide 72, and is fed into the uppermost tapered tube 21. That is, the first tubular guide 12, the second tubular guide 72, and the powder feed pipe 71 form a cyclone.

A gas discharge pipe N is provided at the upper end of the second tubular guide 72, and a line L3A for discharging gas to the outside is connected to the gas discharge pipe N. Furthermore, the second tubular guide 72 is provided with a feed nozzle 75 that feeds the monomer liquid and/or the monomer gas downward from a lower portion of the second tubular guide 72 via a branch line L2A.

Therefore, the monomer liquid and/or the monomer gas fed from the feed nozzle 75 also reduces an amount of the powder in the first tubular guide 12 entering the second tubular guide 72, rising, and being discharged to the outside via the line L3A. In addition, the gas in the gas container 10 can be discharged to the outside via the line L3A.

As understood from Fig. 1 and Figs. 2 to 4, the gas container 10 is provided with a plurality of gas discharge pipes (nozzles) N that is spaced apart from each other in the vertical direction and discharges gas from inside to the outside. The line L3A is connected to each gas discharge pipe (nozzle) N. The gas discharge pipes (nozzles) N are set to be sufficiently large so that discharged gas does not entrain polyolefin powder, and gas linear velocity is lowered.

### (Powder discharge mechanism 50)

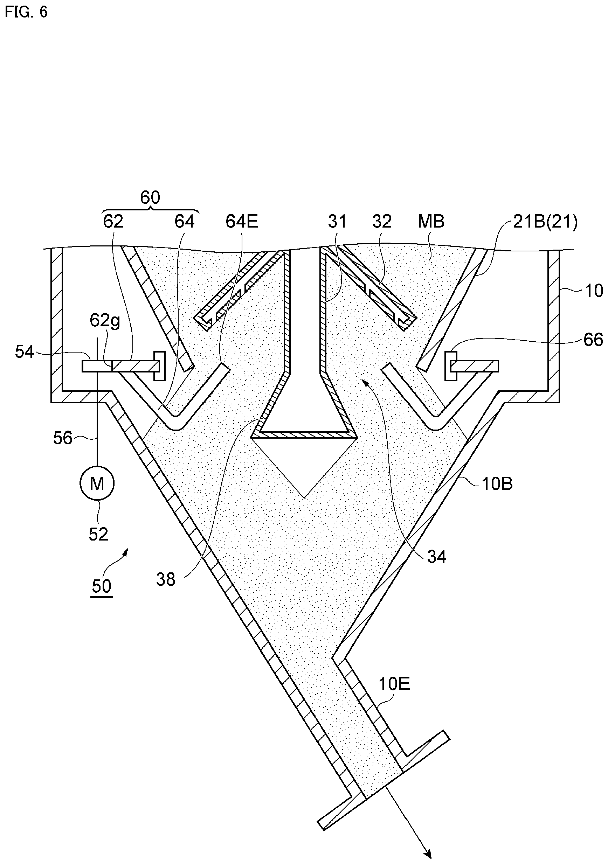

As shown in Fig. 6, the powder discharge mechanism 50 includes a rotary member 60, a guide rail 66, a gear 54, a hopper 10B, a motor 52, and a rotary shaft 56.

In the powder discharge mechanism 50, powder in a powder short pass, that is a central axis portion of the tubular powder container 20, is selectively discharged downward from the lowermost tapered tube 21. Therefore, powder near an outer periphery portion around the central axis portion is less likely to be discharged, and residence time is less likely to vary. As a result, more powder near the outer periphery portion of the tubular powder container 20 drops into the hopper 10B.

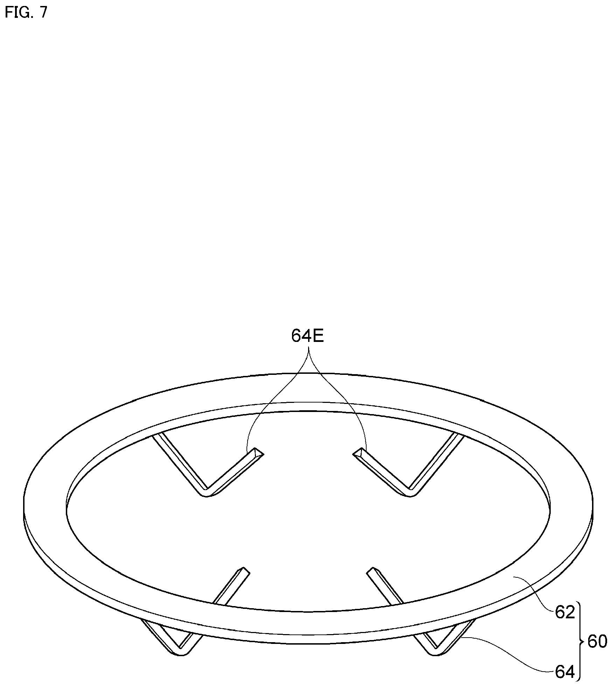

As shown in Fig. 7, the rotary member 60 includes an annular plate 62 and a plurality of hook members 64. The hook members 64 are fixed to a lower surface of the annular plate 62, extends radially inward and obliquely downward from the annular plate 62, and further extends radially inward and obliquely upward. The hook members 64 may have a square rod-shape with, for example, a triangular or quadrangular cross section, or may include a rod shape with a circular cross section, or the like. Each of the hook members 64 may have a V-shape when viewed from a side as shown in Fig. 6, but may have, for example, a U-shape, a semicircular shape, or the like.

When the rotary member 60 is viewed from above, the hook members 64 extend from the annular plate 62 toward the center of the annular plate 62. In the present embodiment, the rotary member 60 includes four hook members 64 disposed radially at equal angular intervals of 90° when viewed from above, but the number of hook members may be, but not limited to, six or eight. Tip ends 64E of the respective hook members 64 are disposed on a circle concentric with the annular plate 62. For example, when the rotary member 60 is viewed from above in the vertical direction, there may be disposed three hook members 64 spaced apart from each other by 120°, four hook members 64 spaced apart from each other by 90°, or six hook members 64 spaced apart from each other by 60°.

As shown in Fig. 6, an inner diameter of the annular plate 62 of the rotary member 60 is larger than the lowermost end of the lowermost tapered tube 21, in other words, outer diameter of an outlet plate 23. The rotary member 60 is disposed such that the annular plate 62 surrounds the lowermost end of the lowermost tapered tube 21, that is, an outer periphery of the outlet plate 23. An inner periphery of the annular plate 62 is supported by a guide rail (bearing) 66, and the rotary member 60 is rotatable around the vertical axis. In this state, the tip ends 64E of the respective hook members 64 are inserted upward into an outer peripheral side of a lower-end opening 34 of the lowermost tapered tube 21B. The outer peripheral side is a region where the radius exceeds 0.5 R where an inner diameter of the lower-end opening 34 is R.

A gear 62G is formed on an outer periphery of the annular plate 62 of the rotary member 60. A hopper 10B constitutes a lower end of the gas container 10 and is provided with a rotary shaft 56, that motor 52 that rotates the rotary shaft 56, and the gear 54 fixed to the rotary shaft 56 and engaging with the gear 62G of the annular plate 62. The motor 52, the rotary shaft 56, the gear 54, and the guide rail (bearing) 66 constitute a rotation mechanism. The motor 52 may be equipped with a speed reducer.

When the motor 52 is driven, the rotary member 60 is rotated, and the tip ends 64E of the hook members 64 scrape powder on a lower outer peripheral side of the tapered tube 21B at the lowermost end. Thus, polyolefin powder in the tubular powder container 20 can be dropped onto the hopper 10B while reducing unevenness between the central axis portion and an outer periphery portion. A rotational rate of the rotary member 60 is not necessarily high, but is set according to an inner diameter of the hook members 64, and may be set to 1 to 10 rotations per minute. Because the annular plate 62 having an inner diameter larger than a lower end of the lowermost tapered tube 21B is used, powder is less likely to come into contact with the guide rail (bearing) 66, making it easier to reduce chances of a trouble caused by the powder.

In addition, in the powder discharge mechanism, a current value of the motor 52 is measured and monitored, by which abnormality such as lump or unevenly flowing polyolefin powder in the tubular powder container 20 can be sensed.

Inner surface of the hopper 10B has an inverted conical shape, and powder can be extracted from a tube 10E at a bottom. The hopper 10B functions as a lower end of the gas container 10 while receiving the polyolefin powder discharged from the lower-end opening 34 of the lowermost tapered tube 21B.

A baffle 38 may be provided in the lowermost tapered tube 21B to reduce a cross-sectional area of a passage through which powder moves downward, by which the powder is less likely to unevenly flow. Outer surface of the baffle 38 has a truncated cone shape in which outer diameter of a lower end is larger than outer diameter of an upper end. The baffle may have an independent structure including a plate material or the like. Alternatively, a lower end of the main pipe 31 of the liquid feed pipe 30 may protrude into the hopper 10B to form the baffle 38.

The present embodiment includes the powder discharge mechanism 50. However, a relatively small polymerization reactor does not need the powder discharge mechanism 50, because, in that case, powder extracted from a central axis portion of a tubular powder container 20 is less likely to flow unevenly, and is easily discharged evenly.

### (Other apparatuses and connection therewith)

As shown in Figs. 1 and 2, the powder feed pipe 71 of the olefin polymerization reactor 100 is connected via the line L9 to a supply source S1 for polyolefin powder, or slurry including polyolefin powder and olefin monomer liquid.

A liquid outlet of the olefin monomer liquid reservoir 80 and an inlet of the pump P1 are connected by a line L5. A line L1 is connected to an outlet of the pump P1. An end of the line L1 opposite to another end connected to the pump P1 is branched into a plurality of branch lines (olefin monomer liquid feed lines) L1A. Each branch line L1A is connected to each liquid feed pipe 30 via each connection pipe 33.

A line L3A is connected to a gas discharge pipe N of each gas container 10, and each line L3A is connected to a merge line L3. The condenser 70 is connected to a downstream side of the merge line L3. The liquid outlet of the condenser 70 is connected to the olefin monomer liquid reservoir 80 via a line L4. A supply source S2 for olefin monomer liquid is connected to the olefin monomer liquid reservoir 80 via a line L6 including a pump P2.

An inlet of the compressor C1 is connected to a gas outlet of the condenser 70 via a line L7, and an outlet of the compressor C1 is connected to a branch line L1A via a line L2 and the branch line L2A.

### (Method for producing polyolefin)

Next, a method for producing polyolefin using the polyolefin production system 200 according to the present embodiment will be described.

First, polyolefin powder containing a polymerization catalyst and/or slurry containing polyolefin powder containing a polymerization catalyst and olefin monomer liquid is supplied from the supply source S1 into the tubular powder container 20 via the line L9 and the powder feed pipe 71. Instead of the polyolefin powder containing a polymerization catalyst, a pre-polymerization catalyst or a solid catalyst may be directly supplied.

The supply source S1 may be a known olefin pre-polymerization reactor. Specifically, the olefin pre-polymerization reactor polymerizes olefin in the presence of an olefin polymerization catalyst to form polyolefin powder. A method for the pre-polymerization is, but not particularly limited to, a method referred to as bulk polymerization in which olefin is polymerized in olefin monomer liquid obtained by dispersing a polymerization catalyst. In this case, slurry containing the olefin monomer liquid and polyolefin powder can be easily obtained.

The diameter of a supplied polyolefin powder particle may be, but not particularly limited to, a particle size 100 um to 2000 µm, more preferably 500 um to 1000 um. The particle size is D50 in volume-based frequency distribution by a laser-diffraction particle-size analyzer.

### (Olefin polymerization catalyst)

Examples of a polyolefin polymerization catalyst in the present invention include a Ziegler-Natta catalyst and a metallocene catalyst, and the Ziegler-Natta catalyst is preferable. Examples of the Ziegler-Natta catalyst contain a Ti-Mg-based catalyst such as a solid catalyst component obtained by bringing a titanium compound into contact with a magnesium compound, a catalyst containing a solid catalyst component obtained by bringing a titanium compound into contact with a magnesium compound, an organoaluminum compound, and, as necessary, a third component such as an electron-donating compound, and the like. The Ziegler-Natta catalyst is preferably a catalyst containing a solid catalyst component obtained by bringing a titanium compound into contact with a magnesium compound, an organoaluminum compound, and, as necessary, a third component such as an electron-donating compound. The Ziegler-Natta catalyst is more preferably a catalyst including a solid catalyst component obtained by bringing a halogenated titanium compound into contact with a magnesium compound, an organoaluminum compound, and an electron-donating compound. As the catalyst, a catalyst brought into contact with a small amount of olefin and pre-activated may be used.

Examples of details of such a catalyst and a method for producing the catalyst are disclosed in, for example, JP-A-7-216017 and JP-A-2004-67850.

### (Olefin and polyolefin)

Examples of the olefin monomer liquid supplied to the olefin polymerization reactor and an olefin serving as a raw material of the polyolefin powder in the slurry include one or more types of olefins selected from a group including α-olefin having 1 to 12 carbon atoms. For example, if ethylene is polymerized, polyethylene powder is obtained, and if propylene is polymerized, polypropylene powder is obtained.

The olefin supplied to the olefin polymerization reactor and/or the olefin serving as a raw material of the polyolefin powder in the slurry may contain two or more types of olefins. For example, if ethylene and one or more types of olefins selected from a group including α-olefin having 3 to 12 carbon atoms are polymerized, powder containing an ethylene-α-olefin copolymer is obtained. Specifically, if the α-olefin is propylene, 1-butene, 1-hexene, or 4-methyl-1 pentene, powder containing an ethylene-propylene copolymer, powder containing an ethylene-1-butene copolymer, powder containing an ethylene-1-hexene copolymer, or powder containing an ethylene-4-methyl-1-pentene copolymer is obtained, respectively. If propylene and one or more types of olefins selected from a group including α-olefin having 4 to 12 carbon atoms are fed into the olefin polymerization reactor, powder containing a propylene-α-olefin copolymer is obtained. Specifically, if the α-olefin is 1-butene, powder containing a propylene-1-butene copolymer is obtained.

The olefin preferably contains propylene. Thus, powder containing a polymer or copolymer having propylene as a monomer unit is obtained.

To the olefin polymerization reactor, an olefin monomer having a composition that provides a polymer or copolymer the same as a polymer or copolymer that constitutes the polyolefin powder fed from a pre-polymerization tank may be fed. Alternatively, to the olefin polymerization reactor, an olefin monomer having a composition that provides a polymer or copolymer different from a polymer or copolymer that constitutes the polyolefin powder fed from the pre-polymerization tank may be fed. As a result, it is possible to obtain powder including a so-called heterophasic polyolefin material. The particles contain a plurality of polyolefins having different types and ratios of monomer units.

In this case, it is preferable that the olefin monomer in each process necessarily contain propylene. As a result, it is possible to obtain powder including a heterophasic propylene polymer material, which is a mixture of propylene (co)polymers necessarily containing propylene as a monomer unit and having different types and ratios of monomers.

The polyolefin powder or powder in the slurry fed from the line L9 and the powder feed pipe 71 is stored in the tubular powder container 20 as shown in Figs. 2 to 4.

In Fig. 1, the olefin monomer liquid is fed to the liquid feed pipe 30 via the pump P1, the line L1, and the branch line L1A, and, as necessary, a trace amount of hydrogen is fed from the compressor C1 to the liquid feed pipe 30 via the line L2, the branch line L2A, and the branch line L1A. An amount of the olefin monomer liquid fed is controlled so as to be an amount consumed in a polymerization reaction, and an amount necessary for removing heat of reaction due to evaporation.

Reaction pressure in the tubular powder container 20 may be 1.5 MPaG to 2.5 MPaG. Reaction temperature in the tubular powder container 20 is higher than a boiling point (gas-liquid equilibrium temperature) of the olefin monomer, and may be, for example, 60°C to 80°C.

In the tubular powder container 20, the fed olefin monomer liquid is evaporated to form olefin gas. The olefin gas is further polymerized by a polymerization catalyst in the polyolefin powder to increase the particle size of the polyolefin powder.

Excess olefin monomer gas is discharged from the gas container 10 via each gas discharge pipe N and line L3A, liquefied by the condenser 70, and recycled to the liquid feed pipe 30 by the pump P1 via the olefin monomer liquid reservoir 80. The pump P2 replenishes the olefin monomer liquid reservoir 80 with the olefin monomer liquid consumed by the polymerization reaction.

Further, the rotary member 60 is rotated to extract the polyolefin powder from the tubular powder container 20 to the hopper 10B below, so that the polyolefin powder in the tubular powder container 20 is in a state of a moving bed. In the present embodiment, the polyolefin powder in the tubular powder container 20 is not fluidized or formed into an entrained-bed.

According to the present embodiment, when polyolefin powder or slurry containing polyolefin powder is fed to an upper portion of the tubular powder container 20, in a case of the slurry, a liquid phase evaporates to form a layer of polyolefin powder in the tubular powder container 20. Further, the powder is continuously or intermittently extracted from the lowermost tapered tube 21B of the tubular powder container 20. As a result, there is formed a moving bed of polyolefin powder that sequentially moves downward in the tapered tube 21 of the tubular powder container 20.

The olefin monomer liquid fed into the tubular powder container 20 comes into contact with the polyolefin powder and evaporates to become olefin monomer gas. The olefin monomer gas is polymerized by the catalyst in the polyolefin powder. Further, heat generated by the polymerization can be removed mainly by utilizing evaporative latent heat of the olefin monomer liquid in the slurry and/or the olefin monomer liquid fed from the liquid feed pipe 30. Because evaporative latent heat has a higher heat density (amount of heat per unit mass) than sensible heat, cooling of heat of reaction of the polyolefin powder is more efficient than when the olefin monomer gas is used, and facilities required for cooling can be reduced.

Further, it is possible to cause excess olefin monomer gas, which has been evaporated by cooled polyolefin powder and has not been consumed by polymerization, to flow out from the gaps G between the tapered tubes 21 into the space between the tubular powder container 20 and the gas container 10, and then to discharge the gas to the outside of the gas container 10 via the gas discharge pipe N. Therefore, it is possible to reduce chances of excess gas generated in a lower portion of the tubular powder container 20 accumulating and traveling toward the upper portion of the tubular powder container 20, causing an excess gas linear velocity at an upper portion of the apparatus. Further, it is also possible to reduce chances of the polyolefin powder being entrained and scattered together with the olefin monomer gas to the outside of the tubular powder container 20 and reduce chances of clogging of the powder feed pipe (pipe) 71 for feeding the slurry from the outside.

In other words, by providing a plurality of gaps (intermediate openings) G spaced apart from each other in the vertical direction to the tubular powder container 20 forming the moving bed MB, olefin gas generated by evaporation of the olefin monomer liquid can be released at each portion in the vertical direction of the tubular powder container 20, from the gaps (intermediate openings) G to outside of the tubular powder container 20 and collected in the gas container 10. Therefore, temperature of the powder in the moving bed MB can be easily controlled. By providing the gaps (intermediate openings) G, the gas does not collect at the uppermost portion of the tubular powder container 20, and the exit velocity of the gas can be reduced. Therefore, an amount of powder entrained by the gas and coming out of the upper portion of the tubular powder container 20 can be reduced.

Each of the tapered tubes 21 has a shape in which the inner diameter increases upward, and the lower-end opening of the tapered tube 21 is smaller than the upper-end opening of the tapered tube 21. Each of the tapered tubes 21 is disposed such that a lower portion of inner surface of each of the tapered tubes 21 is in contact with the moving bed MB and an upper portion of the inner surface of each of the tapered tubes 21 is not in contact with the moving bed MB. In each pair of tapered tubes 21 adjacent to each other in the vertical direction, an upper end of a lower tapered tube 21 is set higher in position than a lower end of an upper tapered tube 21. Therefore, when polyolefin powder moves from the upper tapered tube 21 toward the lower tapered tube 21, the polyolefin powder is less likely to spill out of the tubular powder container 20 in spite of the gaps G, and the powder can be smoothly moved downward between the tapered tubes 21.

With such a structure, gas-phase polymerization is possible while removing heat of reaction without requiring, as in a conventional entrained-bed type or fluidized-bed type, a large blower and a heat exchanger for supplying large flow of fluidizing gas and cooling the gas by sensible heat.

Further, when the olefin monomer gas is liquefied (condensed) in the condenser 70, pressure in the condenser 70 decreases. Therefore, by utilizing a difference in pressure between the gas container 10 and the condenser 70, it is possible to discharge the olefin monomer gas from the gas container 10 of the olefin polymerization reactor 100 toward the condenser 70 without providing a pump/blower or the like in the merge line L3, which is preferable.

As shown in Fig. 5, each of the liquid feed pipes 30 includes a plurality of outlet openings 31A spaced apart from each other in the vertical direction in the tubular powder container 20 and/or a plurality of outlet openings 32A spaced apart from each other in the horizontal direction in the tubular powder container 20. Therefore, it is possible to remove heat from polyolefin powder more uniformly in the moving bed MB.

In particular, because the liquid feed pipe 30 includes the main pipe 31 extending in the vertical direction and the plurality of branch pipes 32 branching from the main pipe 31, uniform heat removal is easy, and an angle β of the branch pipes is set so as to be less likely to inhibit movement of the powder.

Because the main pipe 31 is provided with the plurality of outlet openings 31A and/or each of the branch pipes 32 is provided with the plurality of outlet openings 32A, the uniformity of heat removal is further enhanced.

Further, as shown in Fig. 1, the plurality of liquid feed pipes 30 is provided in the tubular powder container 20 so as to be spaced apart from each other in the vertical direction, and the branch line L1A for the olefin monomer liquid is connected to each of the liquid feed pipes 30. An amount of the olefin monomer liquid to be fed can be individually controlled in a height direction by providing an adjustment valve or the like in each of the branch lines L1A by using the liquid feed pipes 30 by which the system is separated as described above. Therefore, the uniformity of heat removal can be further improved. Further, by intentionally changing an input ratio of a molecular weight adjusting agent and a copolymerization raw material to be fed to each system, it is possible to obtain particles obtained by integrally polymerizing in stages copolymerized polyolefin having a targeted composition in one reaction tank.

In addition, because the branch pipes 32 are disposed obliquely downward, downward movement of the polyolefin powder is hardly hindered, and formation of uneven flow can be easily controlled.

### (Second embodiment)

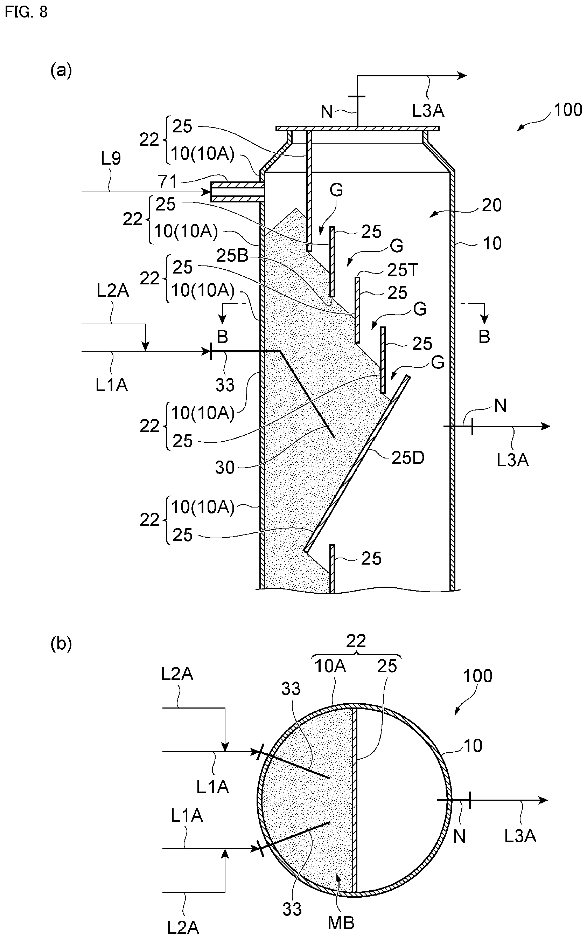

Next, a polyolefin production system according to a second embodiment will be described with reference to Fig. 8. In the present embodiment, only differences from the first embodiment will be described, and description of the same parts will be omitted.

The present embodiment is different from the first embodiment in a form of an olefin polymerization reactor 100.

Specifically, the olefin polymerization reactor 100 according to the present embodiment includes a gas container 10 having a tubular shape and extending in a vertical direction, and a tubular powder container 20.

The tubular powder container 20 includes a plurality of unit tubes 22 provided in the gas container 10. Each of the unit tubes 22 is formed by a part 10A of the gas container 10, and a partition plate 25 provided in the gas container 10 and horizontally partitioning an internal space of the gas container 10.

Between each pair of unit tubes 22 adjacent to each other in the vertical direction, a partition plate 25 of a lower unit tube 22 is disposed away from a partition plate 25 of an upper unit tube 22 in an outward direction of the upper unit tube 22. In other words, positions of the partition plates 25 are horizontally shifted in order such that a horizontal cross-sectional area of an internal space of each unit tube 22 is larger downward, and gaps (intermediate openings) G are formed between the partition plates 25.

In the present embodiment, between each pair of the unit tubes 22 adjacent to each other in the vertical direction, an upper end 25T of a partition plate 25 of a lower unit tube 22 is set higher in position than a lower end 25B of a partition plate 25 of an upper unit tube 22, thereby reducing an amount of powder discharging from gaps G.

Each unit tube 22 is disposed such that a lower portion of inner surface of a partition plate 25 of each unit tube 22 is in contact with a moving bed MB of powder and an upper portion of the inner surface of the partition plate 25 of each unit tube 22 is not in contact with the moving bed MB of powder, thereby reducing an amount of powder discharging from the gaps G.

Note that a partition plate 25D at a lower portion is inclined such that a horizontal cross-sectional area of the unit tube 22 thereof decreases downward, and a horizontal cross-sectional area of a moving bed MB of the unit tubes 22 sequentially increased by shift of the partition plates 25 decreases again downward. A region of the moving bed MB may be set by providing one or more additional partition plates 25 below the partition plate 25D to increase a horizontal cross-sectional area of the moving bed MB of the unit tubes 22 again.

In the present embodiment, unlike the first embodiment, the first tubular guide 12, a second tubular guide 72, and a feed nozzle 75 are not provided. A powder feed pipe 71 feeds polyolefin powder or slurry containing polyolefin powder and monomer liquid into the uppermost unit tube 22 of the tubular powder container 20.

A connection pipe 33 and a liquid feed pipe 30 are similar to the connection pipe 33 and liquid feed pipe 30 according to the first embodiment, and are simplified in Fig. 8 of the present embodiment.

In the present embodiment, the tubular powder container 20 including gaps (central openings) G is provided as in the first embodiment. Therefore, generated gas is suitably discharged from the tubular powder container 20 with small resistance, and polyolefin powder is less likely to flow out to outside from portions other than a lower-end opening the tubular powder container 20.

### (Other embodiments)

The present invention is not limited to the above embodiments, and various modifications can be made.

For example, the liquid feed pipes 30 including the main pipe 31 and the branch pipes 32 are adopted in the above embodiments. However, vertical liquid feed pipes not including branch pipes 32 may be adopted, and for example, a plurality of vertical liquid feed pipes may be disposed in the tubular powder container 20.

In the above embodiments, the outlet openings 31A and 32A for olefin monomer liquid are provided in the respective main pipe 31 and branch pipes 32. However, the branch pipes 32 alone may be provided with an opening. In addition, an outlet opening may be formed at a tip end of the branch pipe 32.

The branch pipes 32 may extend in a horizontal direction or obliquely upward.

The outlet opening 31A of the main pipe 31 may face not obliquely downward but may face horizontally or obliquely upward. Outlet openings 32A of the respective branch pipes 32 may face not downward but obliquely downward, sideways, or upward.

In the above embodiments, a branch line L1A for feeding olefin monomer liquid is connected to each of the liquid feed pipes 30, and an amount of the liquid supplied from each of the liquid feed pipes 30 provided spaced apart from each other in the vertical direction is independently controlled with, for example, valve adjustment in each branch line L1A. However, in a case where the tubular powder container 20 is low in position, the number of the tapered tubes 21 is small, or the like, one liquid feed pipe 30 alone may be provided.

A powder discharge mechanism 50 including a rotary member is provided in the above embodiments. However, various known powder discharge mechanisms may be adopted as long as polyolefin powder is discharged from a lower-end opening of the tubular powder container 20 to form a moving bed of the polyolefin powder. For example, the powder discharge mechanism may be table feeder. An example of this case is an aspect in which a rotary disk is provided opposite to a lower-end opening of the lowermost tapered tube, and an annular powder deposition portion formed on an outer peripheral side of a surface of the rotary disk is scraped off with a fixed scraping plate to drop the powder into a chute.

Cross-sectional shapes of internal spaces of the tubular powder container 20 and gas container 10 are not limited to circular, and may be rectangular, square, or the like.

A form of unit tubes of the tubular powder container 20 is also not particularly limited. The plurality of tapered tubes 21 disposed in the vertical direction in the first embodiment may be so-called funnel-shaped unit tubes in which a straight tube having a constant inner diameter and outer diameter is connected to a lower end of each of the tapered tubes 21.

The tubular powder container 20 may not include a plurality of unit tubes (tapered tubes, or the like). For example, it is possible in some cases to adopt a straight pipe for the tubular powder container 20, in which a plurality of through-holes, slits, or the like having an appropriate shape is provided as intermediate openings.

An annular plate 62 is adopted in the above embodiments. However, as long as the annular plate includes an annular shape, a cross-sectional shape along a radial direction is not limited to a plate, but may be, for example, an annular round bar having a circular cross-sectional shape along the radial direction.

## Claims

1. An olefin polymerization reactor (100) comprising:
a tubular powder container (20) forming a moving bed (MB) in which powder moves downward by gravity, and including a plurality of intermediate openings (G) provided spaced apart from each other in a vertical direction;
a gas container (10) that accommodates gas discharged from the plurality of intermediate openings (G);
a powder feed pipe (71) that feeds, to an upper portion of the tubular powder container (20), polyolefin powder or slurry containing polyolefin powder and olefin monomer liquid;
a liquid feed pipe (30) that feeds olefin monomer liquid to an inside of the tubular powder container (20); and
a gas discharge pipe (N) that discharges olefin monomer gas from the gas container (10) to outside.

2. The olefin polymerization reactor according to claim 1,
wherein the tubular powder container (20) includes a plurality of unit tubes (21,22) disposed side by side in the vertical direction,
an axial direction of each of the unit tubes (21,22) is disposed along the vertical direction, and
the intermediate openings (G) are formed between the unit tubes (21,22).

3. The olefin polymerization reactor according to claim 2, wherein each of the unit tubes (21,22) is a tapered tube (21) of which outer diameter and inner diameter decrease downward.

4. The olefin polymerization reactor according to claim 3, wherein, in each pair of unit tubes (21) adjacent to each other in the vertical direction, an upper end of a lower unit tube (21) is set higher in position than a lower end of an upper unit tube (21).

5. The olefin polymerization reactor according to claim 2, wherein each of the unit tubes (22) is formed by a part of inner surface of the tubular powder container (20), and a partition plate (25) disposed in the tubular powder container (20) and horizontally partitioning an inside of the tubular powder container (20), and
between each pair of unit tubes (22) adjacent to each other in the vertical direction, a partition plate (25) of a lower unit tube (22) is disposed away from a partition plate (25) of an upper unit tube (22) in an outward direction of the upper unit tube (22), and the intermediate opening (G) is formed between the partition plates (25).

6. The olefin polymerization reactor according to claim 5, wherein, in each pair of unit tubes (22) adjacent to each other in the vertical direction, an upper end (25T) of a lower partition plate (25) is set higher in position than a lower end (25B) of an upper partition plate (25).

7. The olefin polymerization reactor according to any one of claims 2 to 6, wherein each of the unit tubes (21,22) is disposed such that a lower portion of inner surface of each of the unit tubes (21,22) is in contact with the moving bed (MB) and an upper portion of the inner surface of each of the unit tubes (21,22) is not in contact with the moving bed (MB).

8. The olefin polymerization reactor according to any one of claims 1 to 7, wherein the liquid feed pipe (30) includes a plurality of outlet openings spaced apart from each other in the vertical direction in the tubular powder container (20) and/or a plurality of outlet openings spaced apart from each other in a horizontal direction in the tubular powder container (20).

9. The olefin polymerization reactor according to any one of claims 1 to 8, wherein the liquid feed pipe (30) includes a main pipe (31) extending in the vertical direction and a plurality of branch pipes (32) branching from the main pipe (31), and preferably the branch pipes (32) extend obliquely downward from the main pipe (31).

10. The olefin polymerization reactor according to claim 9, wherein the main pipe (31) is provided with a plurality of outlet openings (31A), and/or the branch pipes (32) are provided with a plurality of outlet openings (32A) .

11. The olefin polymerization reactor according to any one of claims 1 to 10, wherein a plurality of the liquid feed pipes (30) is provided in the tubular powder container (20) so as to be spaced apart from each other in the vertical direction, and an olefin monomer liquid feed line (33) is connected to each of the liquid feed pipes (30) .

12. The olefin polymerization reactor according to any one of claims 1 to 11, further comprising a hopper (10B) that receives powder discharged from a lower-end opening of the tubular powder container (20), and preferably further comprising a baffle (38) for making a shape of a lower-end opening of the tubular powder container (20) annular.

13. The olefin polymerization reactor according to any one of claims 1 to 12, further comprising:
a circular ring (60) disposed outside of a lower-end portion of the tubular powder container (20) and having an inner diameter larger than an inner diameter of a lower end of the tubular powder container (20);
a hook member (64) fixed to the circular ring (60) and configured such that a tip end of the hook member (64) enters a lower-end opening of the tubular powder container (20) upward; and
a rotation mechanism that rotates the circular ring (60) around a vertical axis.

14. A polyolefin production system (200) comprising:
the olefin polymerization reactor (100) according to any one of claims 1 to 13;
a condenser (70) that condenses gas discharged from the gas discharge pipe (N) to obtain olefin monomer liquid; and
a pump (P1) that feeds olefin monomer liquid obtained by the condenser (70) to the liquid feed pipe (30).

15. A method for producing polyolefin using the olefin polymerization reactor (100) according to any one of claims 1 to 13.
